# FASCICULE DE BREVET EUROPEEN

(11) **EP 3 455 927 B1**
(45) Date de publication et mention de la délivrance du brevet: **09.06.2021**
(21) Numéro de dépôt: 17715506.6
(22) Date de dépôt: 10.04.2017
(51) Int. Cl.: H02K 7/04, H02K 15/16, H02K 1/24, H02K 1/27

(54) **MACHINE ELECTRIQUE AVEC UN ROTOR COMPRENANT UNE CAVITE POUR L'EQUILIBRAGE DYNAMIQUE DE CE ROTOR**
ELEKTRISCHE MASCHINE MIT EINEM ROTOR MIT EINEM HOHLRAUM ZUM DYNAMISCHEN AUSWUCHTEN DES ROTORS
ELECTRICAL MACHINE WITH A ROTOR HAVING A CAVITY FOR THE DYNAMIC BALANCING OF THE ROTOR

(30) Priorité: 12.05.2016 FR 1654216
(43) Date de publication de la demande: 20.03.2019
(73) Titulaire: Mavel EDT S.p.A., 11026 Pont-Saint-Martin (AO) (IT)
(72) Inventeur: BOISSON, Julien, 92500 Rueil-Malmaison (FR); GAUSSENS, Benjamin, 91570 Bievres (FR); FAVRE, Luca, 11010 Valpelline (AO) (IT); BETTONI, Davide, Settimo Vittone (TO) (IT); DIB, Wissam, 92150 Suresnes (FR)
(74) Mandataire: Leoncini, Alberto
(86) Numéro de dépôt international: PCT/EP2017/058561
(87) Numéro de publication internationale: WO 2017/194254

(56) Documents cités:
- US-A1- 2015 357 879

## Description

La présente invention se rapporte à une machine électrique, notamment à son rotor comprenant une cavité pour l'équilibrage dynamique du rotor de cette machine électrique.

Elle concerne plus particulièrement une machine synchrone à reluctance variable.

Généralement, une machine électrique comporte une partie fixe (stator) et une partie rotative (rotor) disposées coaxialement l'une dans l'autre.

Pour de telles machines, le rotor présente des balourds dus à des tolérances de fabrication, de conception mécanique, de répartition de matière,...

Lorsque ce rotor tourne à grande vitesse, ces balourds génèrent des vibrations qui peuvent entraîner un dysfonctionnement de la machine, voire une détérioration du rotor ou de la machine.

De plus, ces vibrations sont la source de bruits qui peuvent nuire au confort d'utilisation de cette machine.

Il est donc impératif de réduire fortement ou de supprimer les balourds du rotor pour éviter ces phénomènes de vibrations.

Pour cela, il est prévu d'équilibrer dynamiquement le rotor en fonction de spécifications établies pour chaque machine (niveau de bruit, fréquence de vibrations, ...).

Il est connu, notamment par le document FR 1 341 204, de réaliser un équilibrage du rotor par un enlèvement de matière. Plus précisément, pour contrecarrer le balourd du rotor, des usinages, par perçage ou fraisage, sont réalisés dans le corps de ce rotor.

Cet équilibrage par enlèvement de matière présente des inconvénients non négligeables.

En effet, en fonction de l'importance de l'enlèvement de matière, les caractéristiques mécaniques du rotor risquent d'être fortement dégradées.

En outre, les particules métalliques générées par l'usinage sont susceptibles d'entraver le fonctionnement de la machine. Ces particules sont attirées par les parties magnétique du rotor et/ou du stator en créant des perturbations dans le fonctionnement, voire un blocage des deux parties l'une par rapport à l'autre.

Il est également connu, pour équilibrer un rotor, d'ajouter de la matière au corps de ce rotor.

La matière utilisée pour compenser le balourd peut être une pâte, malléable au moment de l'application sur le rotor, qui va se durcir après application et assurer ainsi sa tenue mécanique avec le rotor.

L'équilibrage par ajout de pâte d'équilibrage est cependant difficile à mettre en œuvre car la pâte nécessite, après son application sur le rotor, un temps de séchage qui dépend de paramètres extérieurs, comme la température de l'air, l'hygrométrie,...

Il est donc nécessaire de placer le rotor sur un lieu de stockage pendant une durée très variable.

Cela implique une logistique complexe et augmente le coût de production coûteuse.

La matière utilisée peut aussi être des masses métalliques calibrées pour réaliser l'équilibrage du rotor, comme des agrafes, des vis,...

A titre d'exemple et comme cela est mieux décrit dans la demande de brevet FR 2 421 498, ces masses métalliques sont des tôles perforées qui sont fixées par serrage ou collage sur des broches axiales issues du rotor.

Dans cet équilibrage par ajout de matière, il a pu cependant être constaté, qu'en cas d'accélérations ou de décélérations angulaires très importantes du rotor et en fonction du vieillissement de la machine, la pâte ou les masses calibrées peuvent se détacher du rotor et entraîner alors une perte de l'équilibrage du rotor. Cette perte d'équilibrage déclenche en conséquence des vibrations néfastes au fonctionnement de la machine et au confort de l'utilisateur.

De plus, la pâte ou les masses calibrées, qui se sont détachées, peuvent bloquer la rotation du rotor en provoquant un dysfonctionnement grave de la machine.

Ces inconvénients sont encore plus importants dans le cas d'une machine électrique à reluctance variable.

Cette machine comprend un rotor portant des aimants permanents logés à proximité de barrières de flux portées par ce rotor.

Cette configuration rend alors encore plus difficile l'équilibrage par enlèvement de matière compte tenu du volume réduit de la matière constitutive du rotor et du fait que cet enlèvement à réaliser pour obtenir l'équilibrage doit se faire dans une barrière de flux, qui par définition, est un espace vide.

De même, l'ajout de matière risque de perturber la propagation du flux magnétique des aimants, notamment lorsque cet ajout se fait dans une ou des barrières de flux.

Le document US 2015/357879 A1 dévoile une machine électrique équipée d'au moins une masse d'équilibrage.

La présente invention vise à remédier aux inconvénients énumérés ci-dessus en assurant l'équilibrage du rotor par un ajout de matière sans que cet ajout puisse perturber le bon fonctionnement de la machine électrique.

A cet effet, la présente invention concerne une machine électrique selon la revendication 1 comprenant un stator et un rotor, ledit rotor étant formé d'un corps de rotor avec un empilage de tôles placé sur un arbre de rotor, caractérisée en ce que le rotor comprend au moins une cavité avec au moins un bras de maintien d'au moins une masse d'équilibrage dynamique dudit rotor.

Les bras peuvent s'étendre d'un bord de la cavité vers le centre de cette cavité.

Les bras peuvent être décalés circonférentiellement les uns des autres d'un angle de 120°.

Les bras comprennent une extrémité à une distance du centre de la cavité.

Les extrémités des bras comprennent une surface courbe concave.

La masse d'équilibrage peut comprendre une section transversale qui s'inscrit entre les extrémités des bras.

La cavité peut présenter une section fermée, de préférence une section fermée polygonale telle qu'une section fermée pentagonale.

La cavité peut être formée par un poinçonnage réalisée dans les tôles.

La cavité peut être disposée selon l'axe longitudinal du rotor et sensiblement parallèlement à celui-ci.

La cavité peut être située à proximité de l'alésage de réception de l'arbre du rotor.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est une vue schématique en coupe axiale du rotor de l'invention selon la ligne 1-1 de la figure 2 ;
- la figure 2 qui est une vue schématique en coupe radiale du rotor selon la ligne 2-2 de la figure 1 ; et
- la figure 3 qui une vue à grande échelle selon le repère A d'un détail de la figure 2.

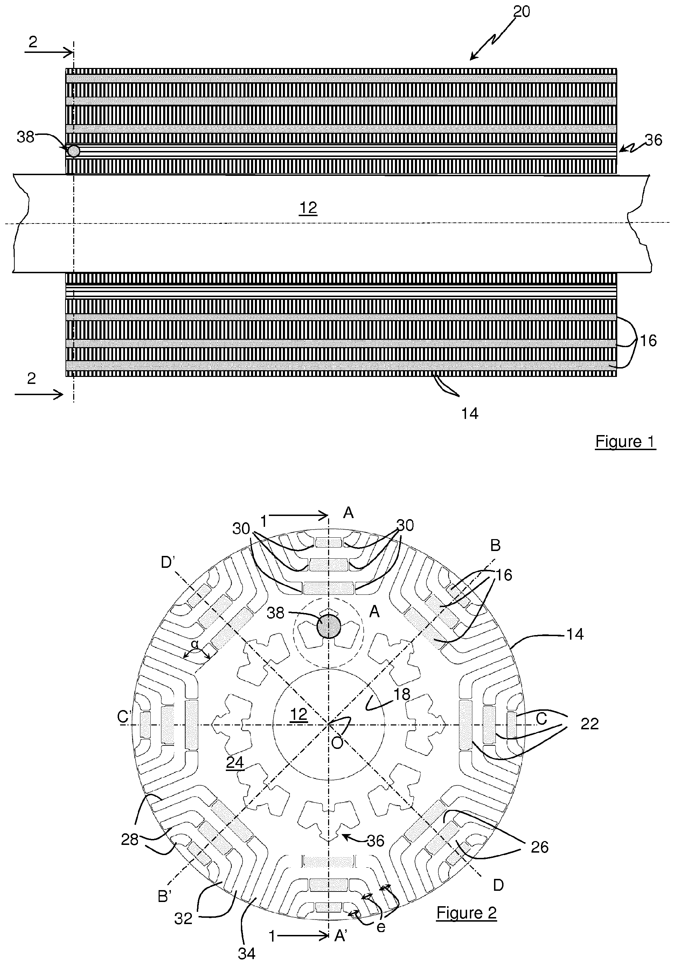

Selon la forme de réalisation illustrée aux figures 1 et 2, une machine électrique tournante comporte un stator (non représenté) et un rotor 10.

Comme illustré sur la figure 1, ce rotor comporte, de manière connue en soi, un arbre 12 sur lequel est placé un empilage de tôles planes identiques 14, de préférence ferromagnétiques, portant une pluralité de générateurs de flux magnétiques 16.

En se rapportant en plus à la figure 2, les tôles 14 de forme circulaire comprennent un alésage central 18 traversé par l'arbre de rotor 12 et une pluralité d'évidements axiaux qui traversent les tôles de part en part.

Comme cela est connu, les tôles sont assemblées les unes aux autres en faisant correspondre les alésages et les évidements par tous moyens connus, comme le collage, le pressage,...

Ainsi assemblées, les tôles forment le corps 20 du rotor 10 qui porte l'arbre 12.

Cette configuration est plus particulièrement appliquée à une machine électrique à reluctance variable comme cela sera mieux décrit ci-après.

Dans cette configuration, le corps comprend une première série d'évidements axiaux qui loge des générateurs de flux magnétique 16 et une autre série d'évidements axiaux qui permet de créer des barrières de flux magnétiques.

La première série d'évidements axiaux 22 est ici en forme de quadrilatère, ici rectangle. Ces évidements 22 reçoivent les générateurs de flux magnétique 16, ici des aimants permanents sous forme de barreau également rectangulaire de longueur sensiblement égale à la longueur du corps. Ces évidements sont appelés dans la suite de la description "logements".

Ces logements 22, ici au nombre de trois, sont disposés radialement les uns au-dessus des autres et à distance les uns des autres à partir du centre O de l'alésage 18.

Cette série de trois logement est répétée circonférentiellement autour du point O, selon quatre axes AA', BB', CC' et DD' décalés d'un angle de 45°, pour former une succession de séries régulièrement reparties autour du point O.

Ainsi comme illustrée sur le figure 2, chaque demi-axe (OA, OA' ; OB, OB' ; OC, OC' ; OD, OD') portent trois logements axiaux 22 dont les faces de plus grande longueur sont perpendiculaires aux demi-axes et dont les dimensions de ces faces vont en diminuant du centre O vers la périphérie de la tôle.

Le logement 22 le plus proche de l'alésage 18 laisse subsister un pont de matière 24 avec cet alésage et un pont de matière 26 demeure entre chaque logement.

Le logement 22 le plus loin de l'alésage 18 est placé à distance du bord périphérique du corps.

L'autre série d'évidements consiste en des perforations 28, d'épaisseur "e" sensiblement constante et de direction radiale inclinée, qui partent de ces logements pour arriver au voisinage du bord des tôles.

Ces perforations partent du bord latéral 30 des logements 22 et s'élèvent selon un angle α à partir d'un plan passant par l'une des faces de plus grande longueur des logements pour arriver à ce voisinage.

Tel que cela est représenté sur la figure 2, les perforations inclinées sont disposées symétriquement par rapport aux logements. Plus précisément, une série de trois perforations inclinées est placée d'un côté du demi-axe et un autre série de trois perforations inclinées est placée de l'autre côté de ce même demi-axe.

Ainsi, il se forme à chaque fois une figure géométrique sensiblement en forme de V à fond aplati avec le fond plat formé par le logement 22 et avec les bras inclinés de ce V formés par les perforations 28. On obtient alors, sur chaque demi-axes, trois formes en V superposées et à distance les unes des autres et de dimensions en hauteur et en largeur qui diminuent de l'alésage vers la périphérie du corps.

Ainsi, outre les ponts de matière 24, 26, il subsiste une partie pleine 32 entre les perforations inclinées de chaque forme en V et une autre partie pleine 34 entre la perforation la plus proche de l'alésage d'une série de trois formes en V et la perforation la plus proche de l'alésage d'une autre série voisine de formes en V.

Par cela, il se crée des barrières de flux formées par les perforations. Le flux magnétique provenant des aimants ne peut alors que transiter par les ponts de matière et les parties pleines.

Ce corps comprend en outre, dans le pont de matière 24 et au voisinage de l'alésage 18 de réception de l'arbre 12, au moins une cavité de réception 36 d'au moins une masse d'équilibrage 38.

Dans l'exemple des figures, il est prévu au moins une cavité placée sur chaque demi-axe, ce qui permet d'obtenir huit cavités régulièrement réparties angulairement.

Avantageusement, cette cavité s'étend d'une face latérale du corps jusqu'à l'autre face et en étant sensiblement parallèle à l'arbre 12.

Cette cavité peut résulter d'un poinçonnage 40 effectué sur chaque tôle et de l'assemblage des tôles les unes avec les autres en formant ainsi cette cavité.

La cavité 36 présente, dans le cas des figures, une section fermée polygonale, ici en forme de pentagone, mais toute autre section peut être envisagée, comme une section circulaire.

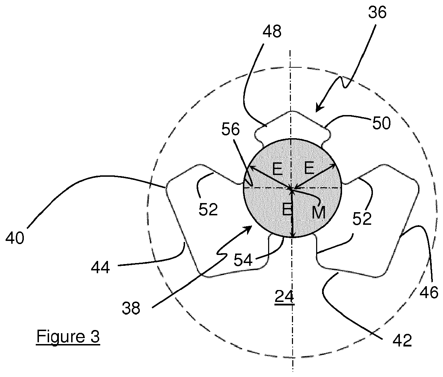

Comme mieux visible sur la figure 3, cette forme pentagonale, qui est ici de forme irrégulière, comprend une base 42, qui coupe de manière orthogonale un demi-axe et qui présente de préférence une courbure correspondante à celle l'alésage. Cette base se poursuit en direction du bord périphérique de la tôle par deux côtés inclinés 44, 46, avec une inclination qui s'écarte du demi-axe, et qui se termine par deux faces inclinées 48, 50 en forme de toit pour fermer la forme pentagonale.

Cette cavité comprend au moins un bras 52, ici trois bras de forme identique, pour le maintien d'au moins une masse d'équilibrage 38 qui est immobilisée dans cette cavité par ces bras.

Ces bras sont disposés à 120° l'un de l'autre et ont une direction qui va vers l'intérieur de la cavité et de préférence vers son centre M.

Tel que cela est représenté sur la figure 3, un des bras prend naissance au niveau de la zone médiane de la base 42 de la cavité en étant orthogonal par rapport à cette face et s'étend verticalement en direction de la jonction des deux faces inclinées 48, 50 jusqu'à ce que l'extrémité libre 54 de ce bras soit à une distance E du centre M de cette cavité.

Chacune des deux faces inclinées 48, 50 porte également un bras 52 qui s'étend vers le centre M et qui arrive à une distance E de ce centre.

Ainsi, la direction générale de ces trois bras se rejoigne au centre M de la cavité.

La masse d'équilibrage 38 peut présenter une section quelconque venant se loger, à force, entre les extrémités libres des trois bras.

A titre d'exemple, la masse d'équilibrage peut être une bille ou un barreau de section circulaire avec un rayon légèrement supérieure à la distance E de façon à ce que cette bille ou ce barreau ait une section transversale qui s'inscrit entre les extrémités des bras en étant maintenue entre ces extrémités 54 par friction.

Dans cette configuration avec une bille ou un barreau de section circulaire, les extrémités 54 des bras 52 présentent une surface courbe concave 56, de rayon qui correspond à la distance E.

Dans un autre exemple, la masse d'équilibrage peut présenter une section différente mais contenue dans l'espace entre les extrémités des trois bras, tel qu'un barreau de section triangulaire ou hexagonale que l'on introduit à force entre les extrémités de ces trois bras.

Pour réaliser l'équilibrage du rotor 10, il est nécessaire tout d'abord de définir et de localiser les balourds à équilibrer.

Cette opération peut être réalisée sur des machines appropriées qui sont largement connues par l'homme du métier. Ceci permet de déterminer, généralement par le calcul et selon des lois de correction de balourds, la quantité et le positionnement de masses d'équilibrage à ajouter au rotor pour l'équilibrer.

Le procédé selon l'invention consiste donc à ajouter une ou plusieurs masses d'équilibrage, ici sous forme de billes, dans une ou plusieurs cavités 36.

Grâce à cela, il peut être réalisé un équilibrage du rotor sans perturber la transmission du flux magnétique dans les ponts et/ou les parties pleines.

De plus, les bras ont une certaine élasticité radiale et axiale qui autorisent l'absorption des tolérances de fabrication de la bille tout en assurant un maintien de cette bille dans la cavité.

En outre, les cavités permettent de diminuer le poids du rotor, ce qui ne peut qu'améliorer les performances dynamiques de ce rotor.

## Revendications

1. Machine électrique comprenant un stator et un rotor (10), ledit rotor étant formé d'un corps de rotor (20) avec un empilage de tôles (14) placé sur un arbre de rotor (12), où le rotor comprend au moins une cavité (36) avec des bras (52) de maintien d'au moins une masse d'équilibrage (38) dynamique dudit rotor, où les bras (52) comprennent une extrémité (54) à une distance (E) du centre (M) de la cavité, **caractérisée en ce que** les extrémités (54) des bras (52) comprennent une surface courbe concave (56).

2. Machine électrique selon la revendication 1, **caractérisée en ce que** les bras (52) s'étendent d'un bord (42; 44, 46; 48, 50) de la cavité vers le centre (M) de cette cavité.

3. Machine électrique selon l'une des revendications précédentes, **caractérisée en ce que** les bras (52) sont décalés circonférentiellement les uns des autres d'un angle de 120°.

4. Machine électrique selon l'une des revendications précédentes, **caractérisée en ce que** la masse d'équilibrage (38) comprend une section transversale qui s'inscrit entre les extrémités (54) des bras (52).

5. Machine électrique selon l'une des revendications précédentes, **caractérisée en ce que** la cavité (36) présente une section fermée.

6. Machine électrique selon la revendication 5, **caractérisée en ce que** la cavité (36) présente une section fermée polygonale.

7. Machine électrique selon la revendication 5 ou 6, **caractérisée en ce que** la cavité (36) présente une section fermée pentagonale.

8. Machine électrique selon l'une des revendications précédentes, **caractérisée en ce que** la cavité (36) est formée par un poinçonnage (40) réalisée dans les tôles.

9. Machine électrique selon l'une des revendications précédentes, **caractérisée en ce que** la cavité (36) est disposée selon l'axe longitudinal du rotor et sensiblement parallèlement à celui-ci.

10. Machine électrique selon l'une des revendications précédentes, **caractérisée en ce que** la cavité (36) est située à proximité de l'alésage (18) de réception de l'arbre (12) du rotor.

## Patentansprüche

1. Elektrische Maschine, umfassend einen Stator und einen Rotor (10), wobei der Rotor aus einem Rotorkörper (20) mit einem Stapel von Blechen (14) besteht, die auf einer Rotorwelle (12) angeordnet sind, wobei der Rotor umfasst mindestens einer Hohlraum (3) mit Armen (52) zum Aufrechterhalten mindestens einer dynamischen Ausgleichsmasse (38) des Rotors, wobei die Arme (52) ein Ende (54) in einem Abstand (E) von der Rotormitte (M) aufweisen des Hohlraums, **dadurch gekennzeichnet, dass** die Enden (53) der Arme (52) eine konkav gekrümmte Oberfläche (56) aufweisen.

2. Elektrische Maschine nach Anspruch 1, **dadurch gekennzeichnet, dass** sich die Arme (52) von einer Kante (42; 44,46; 48,50) des Hohlraums zur Mitte (M) dieses Hohlraums erstrecken.

3. Elektrische Maschine nach einem der vorhergehenden Ansprüche, **dadurch gekennzeichnet, dass** die Arme (52) um einen Winkel von 120° in Umfangsrichtung voneinander versetzt sind.

4. Elektrische Maschine nach einem der vorhergehenden Ansprüche, **dadurch gekennzeichnet, dass** die Ausgleichsmasse (38) einen Querschnitt aufweist, der zwischen die Enden (54) der Arme (52) passt.

5. Elektrische Maschine nach einem der vorhergehenden Ansprüche, **dadurch gekennzeichnet, dass** der Hohlraum (36) einen geschlossenen Abschnitt aufweist.

6. Elektrische Maschine nach Anspruch 5, **dadurch gekennzeichnet, dass** der Hohlraum (36) einen geschlossenen polygonalen Querschnitt aufweist.

7. Elektrische Maschine nach Anspruch 5 oder 6, **dadurch gekennzeichnet, dass** der Hohlraum (36) einen geschlossenen fünfeckigen Abschnitt aufweist.

8. Elektrische Maschine nach einem der vorhergehenden Ansprüche, **dadurch gekennzeichnet, dass** der Hohlraum (36) durch Stanzen (40) in den Blechen gebildet wird.

9. Elektrische Maschine nach einem der vorhergehenden Ansprüche, **dadurch gekennzeichnet, dass** der Hohlraum (36) entlang der Längsachse des Rotors und im wesentlichen parallel dazu angeordnet ist.

10. Elektrische Maschine nach einem der vorhergehenden Ansprüche, **dadurch gekennzeichnet, dass** sich der Hohlraum (36) in der Nähe der Bohrung (18) zur Aufnahme der Welle (12) des Rotors befindet.

## Claims

1. Electrical machine comprising a stator and a rotor (10), said rotor being formed of a rotor body (20) with a stack of sheets (14) placed on a rotor shaft (12), where the rotor comprises at least one a cavity (3) with arms (52), for maintaining at least one dynamic balancing mass (38) of said rotor, where the arms (52) comprise one end (54) at a distance (E) from the rotor center (M) of the cavity, **characterized in that** the ends (53) of the arms (52) comprise a concave curved surface (56).

2. Electric machine according to claim 1, **characterized in that** the arms (52) extend from an edge (42; 44.46; 48.50) of the cavity towards the center (M) of this cavity.

3. Electric machine according to any one of the preceding claims, **characterized in that** the arms (52) are circumferentially offset from each other by an angle of 120°.

4. Electric machine according to any one of the preceding claims, **characterized in that** the balancing mass (38) comprises a cross section which fits between the ends (54) of the arms (52).

5. Electric machine according to one of the preceding claims, **characterized in that** the cavity (36) has a closed section.

6. Electric machine according to claim 5, **characterized in that** the cavity (36) has a closed polygonal section.

7. Electric machine according to claim 5 or 6, **characterized in that** the cavity (36) has a closed pentagonal section.

8. Electric machine according to one of the preceding claims, **characterized in that** the cavity (36) is formed by a punching (40) made in the sheets.

9. Electrical machine according to any one of the preceding claims, **characterized in that** the cavity (36) is arranged along the longitudinal axis of the rotor and substantially parallel thereto.

10. Electric machine according to any one of the preceding claims, **characterized in that** the cavity (36) is located near the bore (18) for receiving the shaft (12) of the rotor.
